# EUROPÄISCHE PATENTSCHRIFT

(11) **EP 1 320 984 B1**
(45) Veröffentlichungstag und Bekanntmachung des Hinweises auf die Patenterteilung: **10.02.2010**
(21) Anmeldenummer: 01971621.6
(22) Anmeldetag: 21.08.2001
(51) Int. Cl.: H04L 12/14, H04M 15/28, H04M 15/08

(54) **KOSTENABRECHNUNG BEI DATENÜBERTRAGUNG IN EINEM MOBILFUNKNETZ**
COST ACCOUNTING DURING DATA TRANSMISSION IN A MOBILE RADIOTELEPHONE NETWORK
DECOMPTE DES COUTS LORS DE LA TRANSMISSION DE DONNEES DANS UN RESEAU DE TELEPHONIE MOBILE

(30) Priorität: 22.09.2000 DE 10047128; 09.10.2000 DE 10049802; 09.01.2001 DE 10100610; 13.02.2001 EP 01103357
(43) Veröffentlichungstag der Anmeldung: 25.06.2003
(73) Patentinhaber: SIEMENS AKTIENGESELLSCHAFT, 80333 München (DE)
(72) Erfinder: SCHMIDT, Gunnar, 38304 Wolfenbüttel (DE); LAUMEN, Josef, 31141 Hildesheim (DE); SCHMIDT, Andreas, 38114 Braunschweig (DE)
(86) Internationale Anmeldenummer: PCT/DE2001/003182
(87) Internationale Veröffentlichungsnummer: WO 2002/025922

(56) Entgegenhaltungen:
- WO-A-00/45609
- WO-A-98/56202
- US-A- 6 104 792
- "UNIVERSAL MOBILE TELECOMMUNICATIONS SYSTEM (UMTS) MULTIMEDIA MESSAGING SERVICE (MMS), FUNCTIONAL DESCRIPTION STAGE 2" ETSI TS 123 140 V3.0.1, XX, XX, März 2000 (2000-03), Seiten 6-17, XP002948976

## Beschreibung

Die Erfindung betrifft ein Verfahren zur Abrechnung von Datenübertragungskosten in einem Mobilfunknetz nach dem Oberbegriff des Anspruchs 1.

Bisherige Mobilfunknetze, wie etwa das nach dem GSM-Standard arbeitende Netz, eröffnen noch recht eingeschränkte Möglichkeiten zur Übertragung von Textdaten. So können etwa bis zu 160 Zeichen umfassende Kurznachrichten übertragen werden. Diese Einrichtung wird als SMS (Short message Service) bezeichnet. Für die Kosten des Versands derartiger Textnachrichten hat der Datenversender aufzukommen.

Zukünftig soll auch eine Übertragung von Multimediadaten, insbesondere stehenden oder bewegten Bildern mit oder ohne Ton, möglich sein. Es ist mit einer erheblichen Ausweitung der Datenübertragungsmengen innerhalb solcher Übertragungen zu rechnen, was mit einer Kostensteigerung einhergeht.

Es offenbaren hierzu:
- Dokument US 6,104,792 eine Lehre zum Bereitstellen von Gebühreninformationen,
- Dokument WO 00/45609 einen Gebührenhinweis,
- Dokument ETSI TS 123,140, V3.0.1 eine Funktionsbeschreibung eines Multimedia Message Service (MMS) für UMTS,
- Dokument WO 98/56202 eine Vergebührung von SMS.

Der Erfindung liegt das Problem zugrunde, die Kostenkontrolle für Teilnehmer eines Mobilfunknetzes zu vereinfachen.

Die Erfindung löst dieses Problem durch ein Verfahren gemäß anspruch 1, ein gerät gemäß anspruch 21 und ein software gemäß anspruch 26.

Mit dem erfindungsgemäßen Verfahren ist eine Kosteninformation an den Datenempfänger oder alternativ oder zusätzlich an den Datenversender möglich, was diesem die Kostenkontrolle erleichtert.

Wenn das dafür eingesetzte Identifizierungssignal Information über den Kostenschuldner enthält, kann der Empfänger daran ermitteln, wer für die Kosten dieser Datenübertragung aufzukommen hat.

Wenn das Identifizierungssignal Information über die Höhe der Übertragungskosten enthält, ist die Transparenz der entstehenden Kosten weiter verbessert.

Besonders vorteilhaft kann vom Datenversender ausgewählt werden, ob die Kosten einer Datenübertragung ihm oder ganz oder teilweise dem Empfänger auferlegt werden sollen. Mit dem oben genannten Identifikationssignal hat der Empfänger dann die Möglichkeit zu erfahren, ob er die Kosten zu tragen hat und vorteilhaft auch, wie hoch die Kosten sind.

Es ist dabei in Weiterentwicklung der Erfindung die Möglichkeit für den Empfänger vorgesehen, die Kostenübernahme zumindest zum aktuellen Zeitpunkt zu verweigern und eine Übertragung erst in einer billigeren Übertragungszeit oder gar nicht vorzunehmen.

Insgesamt kann damit eine Kostenverteilung vom Versender je nach Art der zu übermittelnden Daten vorgenommen werden, worüber zumindest der Empfänger nach Art und Höhe informiert wird und seinerseits entscheiden kann, ob er damit einverstanden ist.

Kostenkontrolle und -transparenz sind damit entscheidend verbessert.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Abbildung von einer Datenübertragung zugeordneten Sendungen gemäß dem WAP-Standard (Wireless application protocoll) zwischen der Ebene des Versenders und der des Providers einerseits und der Ebene des Providers und der des Empfängers andererseits,

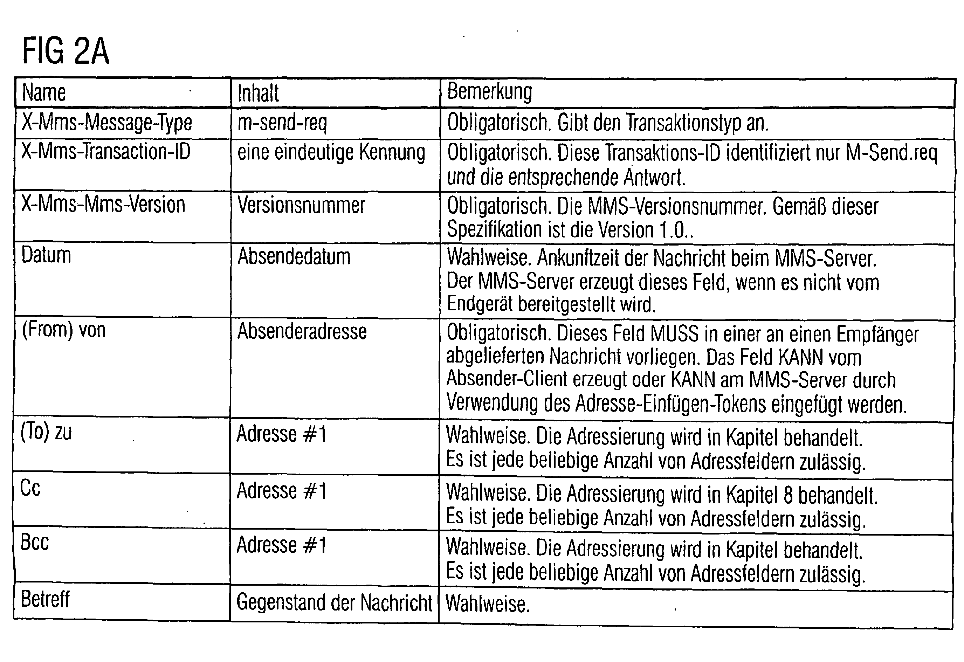

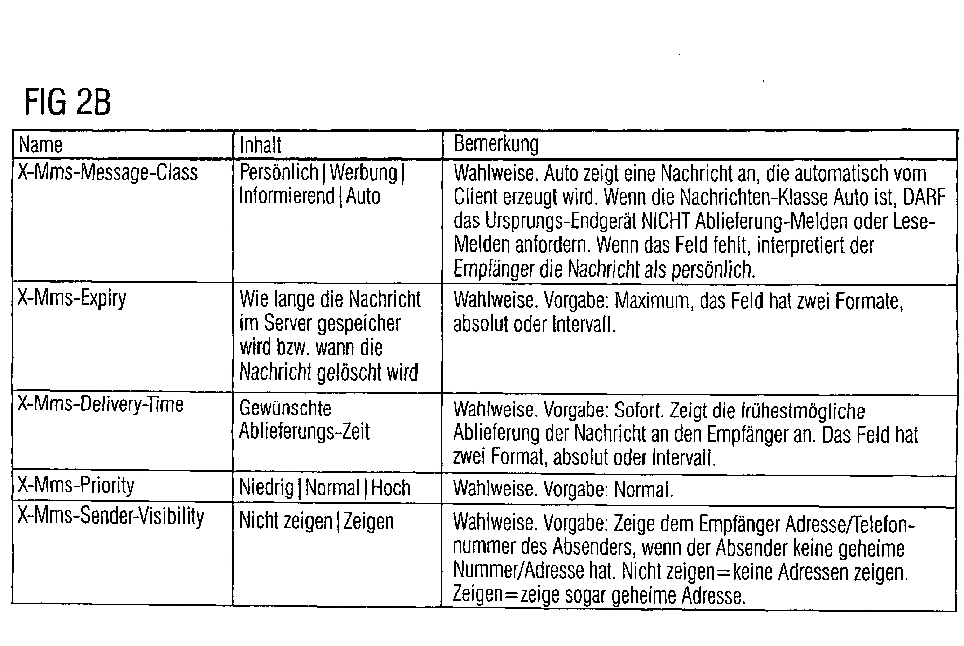

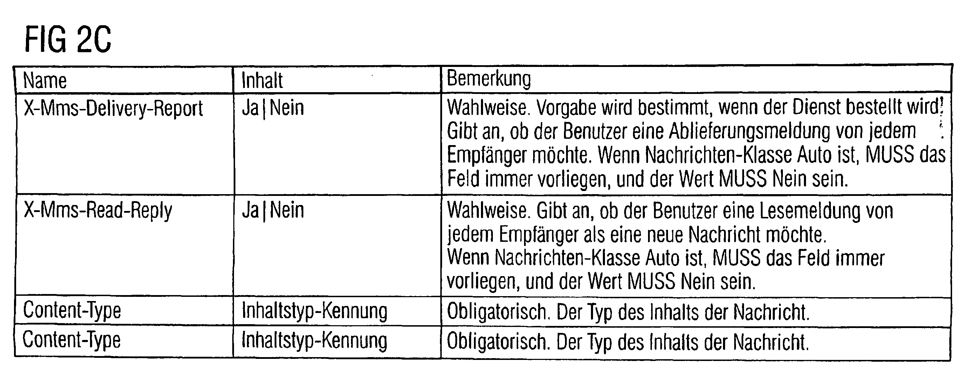

- Fig. 2: mit Figurenteilen 2A, 2B, 2C die Sendung M-send.req nach dem WAP-Protokoll,
- Fig. 3: mit Figurenteilen 3A, 3B, 3C die Sendung M-send.req mit der erfindungsgemäßen Ergänzung eines Identifikationssignals,

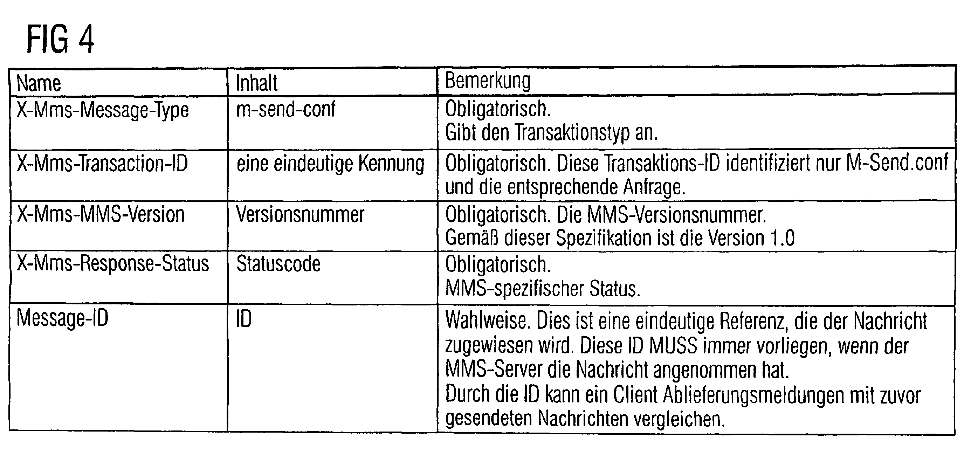

- Fig. 4: die Sendung M-send.conf nach dem Was-protokolls
- Fig. 5: die Sendung M-send.conf mit der erfindungsgemäßen Ergänzung eines Identifikationssignals,

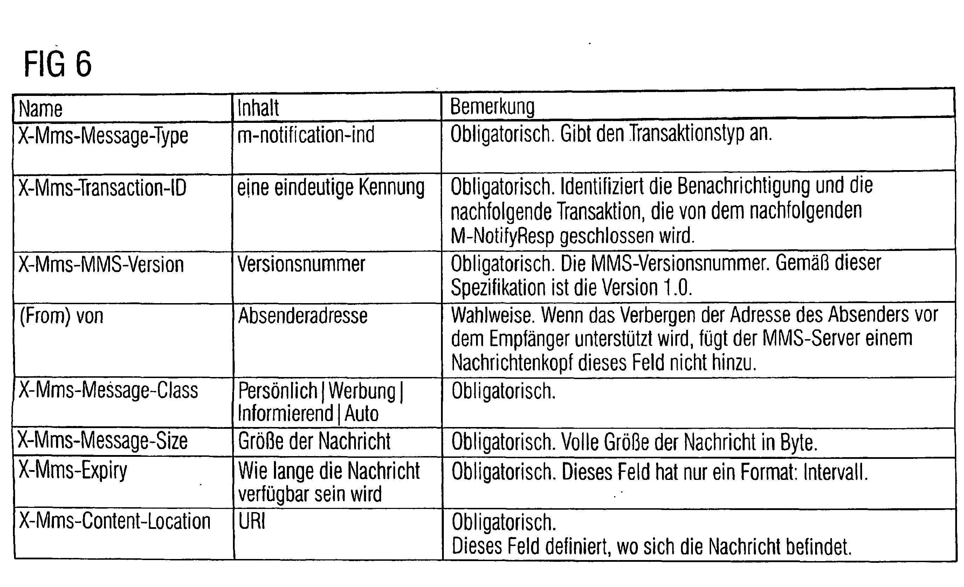

- Fig. 6: die Sendung M-Notification.ind nach dem WAP-Protokoll,
- Fig. 7: die Sendung M-Notification.ind mit der erfindungsgemäßen Ergänzung eines Identifikationssignals,

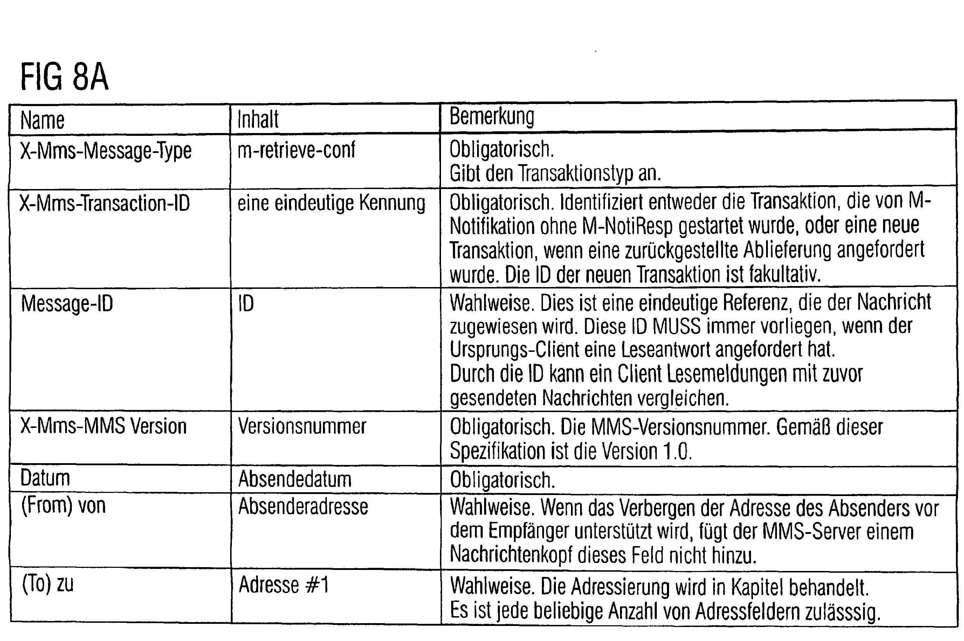

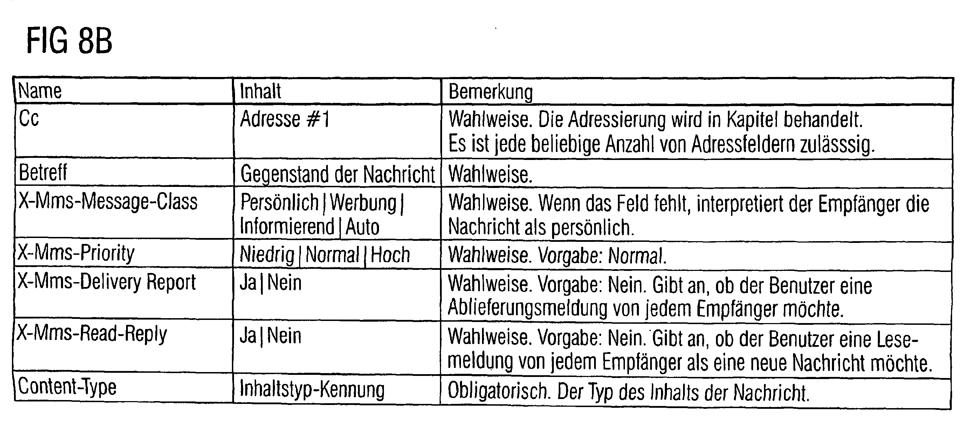

- Fig. 8: mit Figurenteilen 8A, 8B die Sendung M-Retrieve.conf nach dem WAP-Protokoll,
- Fig. 9: mit Figurenteilen 9A, 9B die Sendung M-Retrieve.conf mit der erfindungsgemäßen Ergänzung eines Identifikationssignals,
- Fig. 10: die Belegung von Feldern der Sendungen nach den vorangegangenen Figuren,

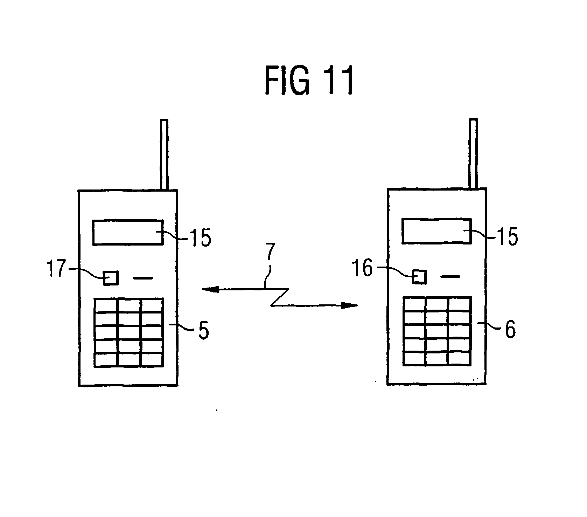

- Fig. 11: eine prinzipielle Darstellung der Datenübertragung mit erfindungsgemäßen Mobiltelekommunikationsgeräten.

Im Ausführungsbeispiel ist die Anwendung der Erfindung auf ein Datenübertragungsschema 1 für den WAP-Standard, wie es in der Übertragung von insbesondere Bilddaten und formatierten Textdaten im UMTS-Standard (Universal mobile telecommunication standard) Verwendung finden wird, beschrieben. Es versteht sich, daß die Erfindung auch auf andere Standards übertragbar ist.

insbesondere im UMTS-Standard ist vorgesehen, zusätzlich zum bisherigen SMS ein sog. MMS (Multimedia Messaging Service) für die Übertragung von Nachrichten vorzusehen. Damit können auch formatierte Texte und Bilder übertragen werden. Die im SMS vorhandene Beschränkung auf eine Nachrichtenlänge von 160 Zeichen entfällt. Eine Übertragung von Audio- und Videonachrichten ist möglich.

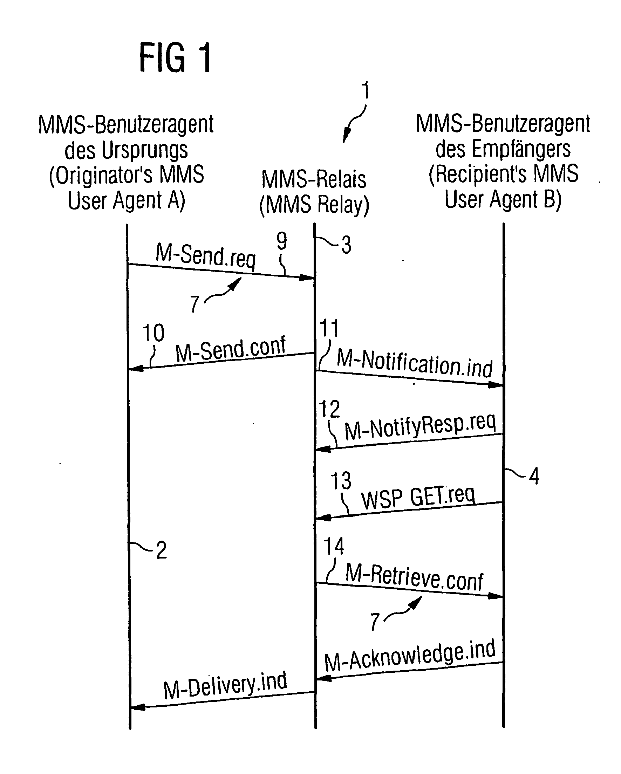

MMS ist über die Nutzung von WAP realisierbar. Dabei wird für die Funkübertragung von Daten, etwa von Multimedia Messages (MMs) das in Fig. 1 dargestellte Protokollschema (WAP WSP: Wireless Session Protocoll) angewandt. Dieses umfaßt eine Ebene 2 eines Datenversenders, eine Ebene 3 eines Providers und eine Ebene 4 eines Empfängers. Die Ebene 2 des Datenversenders umfaßt zumindest ein Telekommunikationsgerät 5, ebenso umfaßt die Ebene 4 des Empfängers ein Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, ausgebildet sein.

Ein im Telekommunikationsgerät 5 des Versenders verfaßter oder über dieses weiterzuleitender Datensatz 7 wird zunächst als Sendung 9 (diese trägt im WAP-Protokoll den Namen M-Send.req) an den Provider (Ebene 3) versandt.

Von dort wird die eingegangene Sendung mit der Rücksendung 10 (M-send.conf) an den Versender (Ebene 2) quittiert.

Zeitlich darauffolgend wird vom Provider 3 die Information 11 (M-Notification.ind) an den Empfänger (Ebene 4) gesandt, mit der dieser darüber informiert wird, daß für ihn eine Nachricht beim Provider 3 zum Herunterladen bereitliegt.

Hierüber erhält der Provider 3 beispielsweise automatisch die quittierende Rückmeldung 12 (M-NotifyResp.req) vom Telekommunikationsgerät 6 des Empfängers (Ebene 4).

Erst auf Anforderung durch den Empfänger mit der Sendung 13 (WSP GET.req) wird vom Provider der Datensatz 7 mit der Sendung 14 (M-retrieve.com) an den Empfänger weitergeleitet.

Zur Verwaltung der Sendungen 9, 10, 11, 12, 14 dienen die sog. Header-fields, also dem eigentlichen Datensatz 7 vorangestellte Felder, in denen Informationen über die Herkunft, Sendezeit, Dateigröße und weitere Details enthalten sind.

Erfindungsgemäß ist die Anzahl der Header-fields erhöht, um zumindest ein weiteres Feld als Kosteninformationsfeld nutzen zu können und darin ein Identifizierungssignal für die Kosten der Übertragung dem Empfänger und/oder dem Versender zusenden zu können.

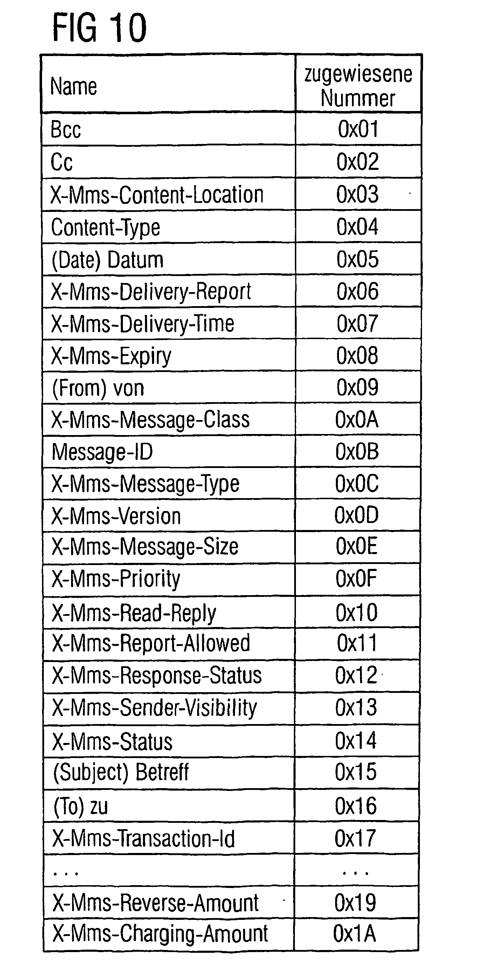

Im Ausführungsbeispiel ist dafür das mit 0x19 im Hexadezimalsystem (entspricht 25 im Dezimalsystem) adressierte Feld (Fig. 10) vorgesehen, um die Information über die Auswahl des Empfängers als Kostenschuldners aufzunehmen, das Feld 0x1A (im Dezimalsystem 26) enthält Information über die Höhe der Kosten.

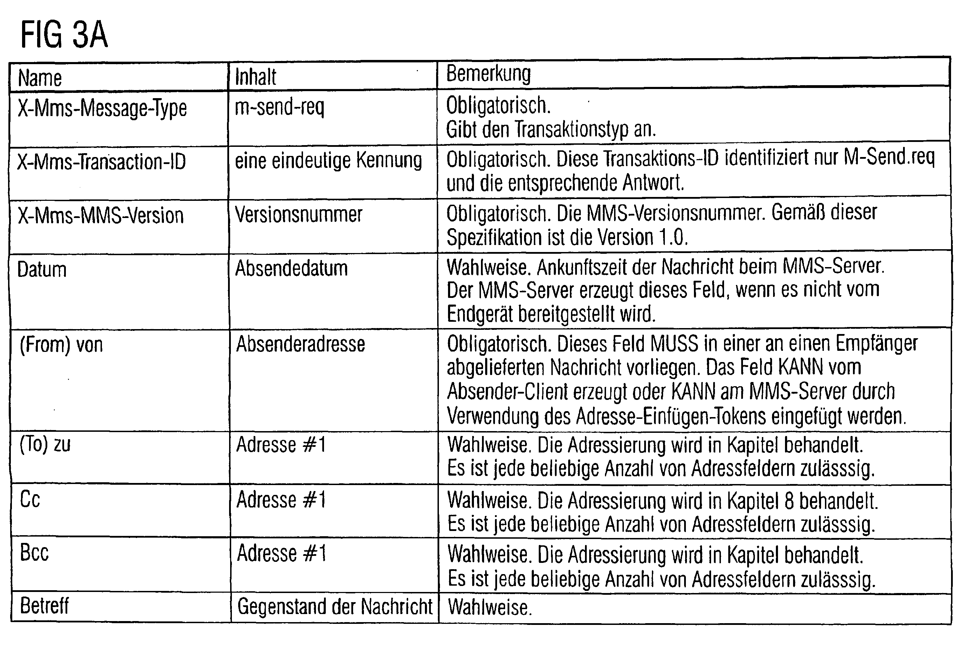

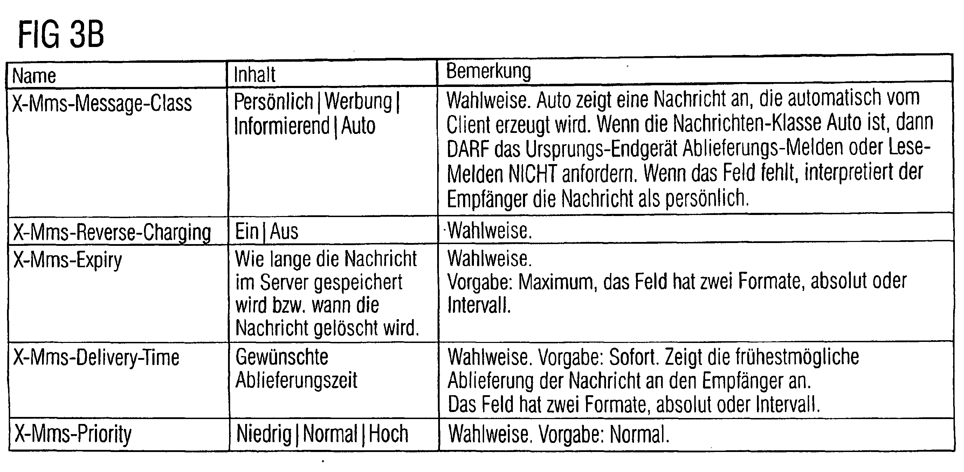

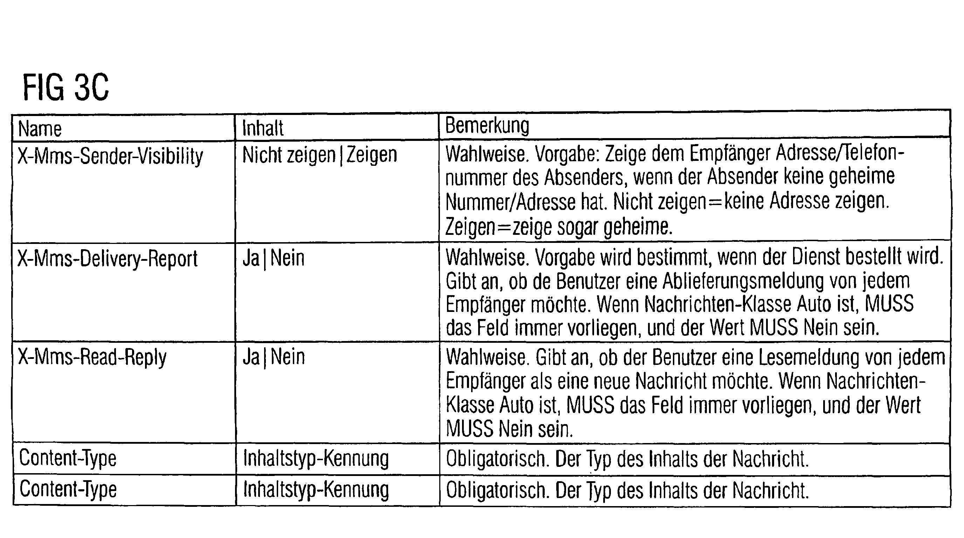

Der Versender (Ebene 2) kann an seinem Telekommunikationsgerät 5 einen hardwareseitig oder insbesondere softwareseitig und über die ohnehin vorhandene Tastatur zu bedienenden Schalter 17 betätigen, um damit in Feld 0x19 die Information "Reverse charging on", also Kostenübernahme durch den Empfänger, oder "Reverse charging off", also Kostenübernahme durch den Versender in herkömmlicher Weise, abzulegen. Beispielsweise wird bei "Reverse charging on" dem Feld 0x19 der Wert 128 und bei "Reverse charging off" der Wert 129 zugeordnet. Dieses Feld wird durch Schalterbetätigung beim Versender belegt und mit der Sendung 9 (Fig. 3) an den Provider (Ebene 3) gesandt. Anstelle einer einfachen Ja/nein-Auswahl kann auch eine Abstufung im Feld "Reverse charging on/off" vorgesehen sein, um beispielsweise eine hälftige oder andere Kostenteilung zwischen Versender und Empfänger zu wählen.

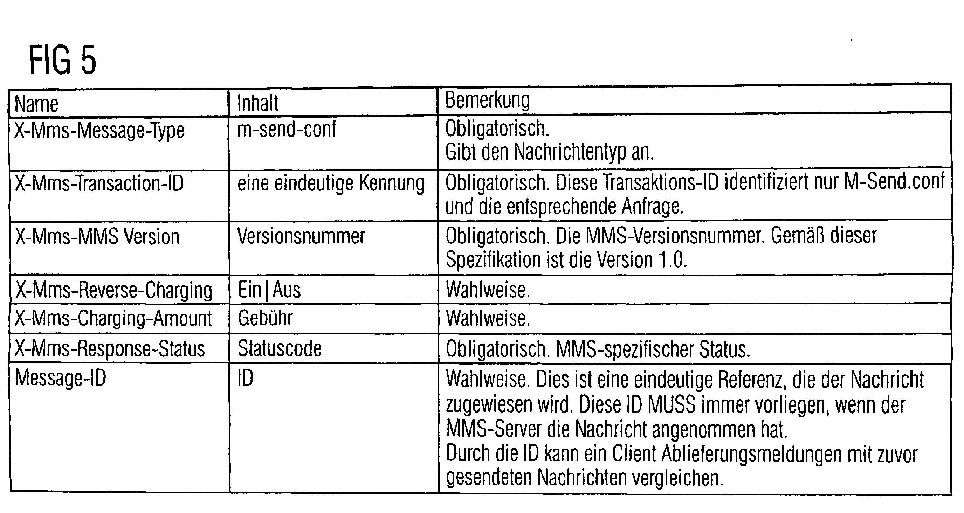

Der Provider bestätigt in seiner Quittierungsnachricht 10 (Fig. 5) seine Bereitschaft, die Kostenübernahme durch den Empfänger zu akzeptieren und setzt dann das Feld 0x19 in der Sendung 10 (M-send.conf) an den Versender auf "Reverse charging on", bei Ablehnung hingegen auf "Reverse charging off". Hierüber erhält der Versender die entsprechende Nachricht, daß sein Kostenübergabewunsch angenommen oder abgelehnt wurde. Zudem enthält die Sendung 10 im Feld 0x1A beispielsweise als String-Datei eine Information über die Kostenhöhe, angefertigt durch den Provider (Ebene 3). Diese Information kann dem Versender unabhängig davon mitgeteilt werden, ob dieser die Kosten selbst übernehmen oder dem Empfänger auferlegen will, was die Kostentransparenz verbessert. Auch ist es möglich, diese Information nur dann an den Versender zurückzuleiten, wenn dieser "reverse charging off" gewählt hat.

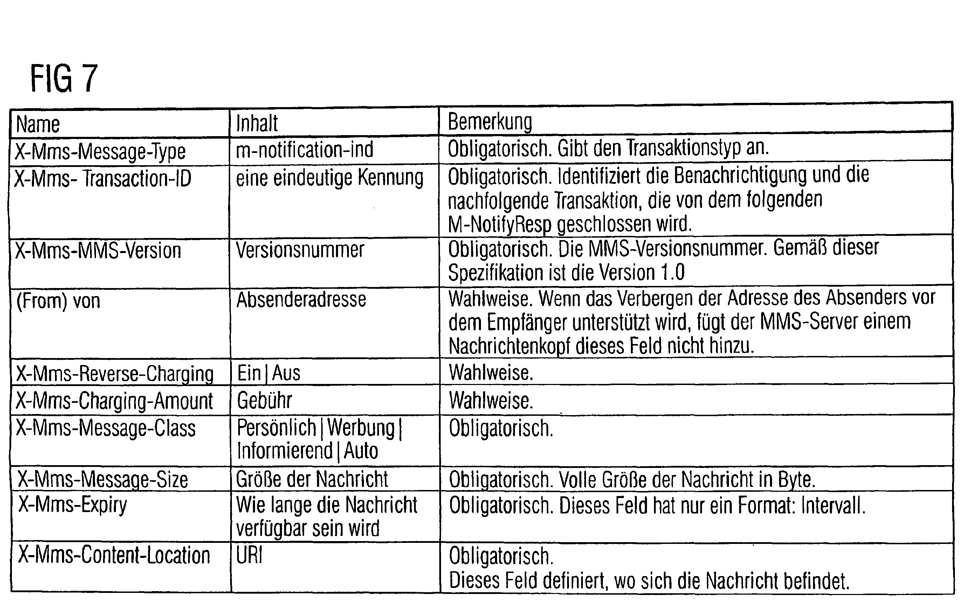

Der Provider beläßt bei Einverständnis mit der gewünschten Kostenübernahme durch den Empfänger in seiner an diesen gerichteten Sendung 11 M-notification.ind (Fig. 7) das Feld 0x19 auf "Reverse charging on". Der Empfänger erhält dann die Nachricht, daß für ihn ein kostenpflichtiger Datensatz 7 zum Herunterladen bereitliegt. Zudem enthält die Sendung 11 im Feld 0x1A beispielsweise als String-Datei die Information über die Kostenhöhe, angefertigt durch den Provider (Ebene 3). Diese Information kann dem Empfänger optisch (über das Anzeigemittel 15, beispielsweise das Display) oder akustisch unabhängig davon mitgeteilt werden, ob dieser nach Wunsch des Versenders die Kosten übernehmen soll oder nicht, was die Kostentransparenz verbessert. Auch ist es möglich, diese Information nur dann an den Empfänger zu leiten, wenn der Modus "reverse charging on" gewählt wurde.

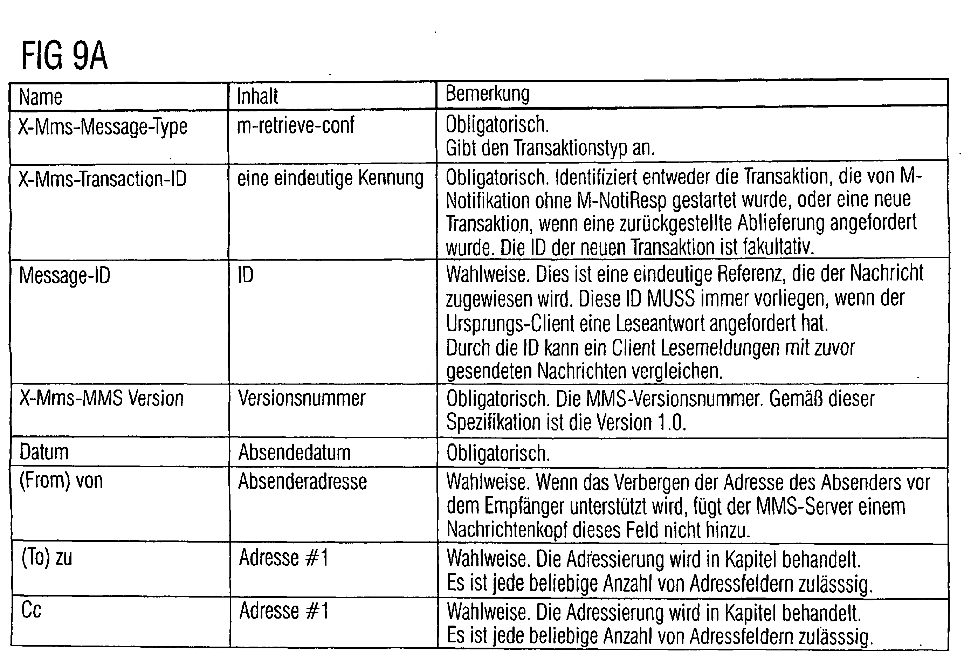

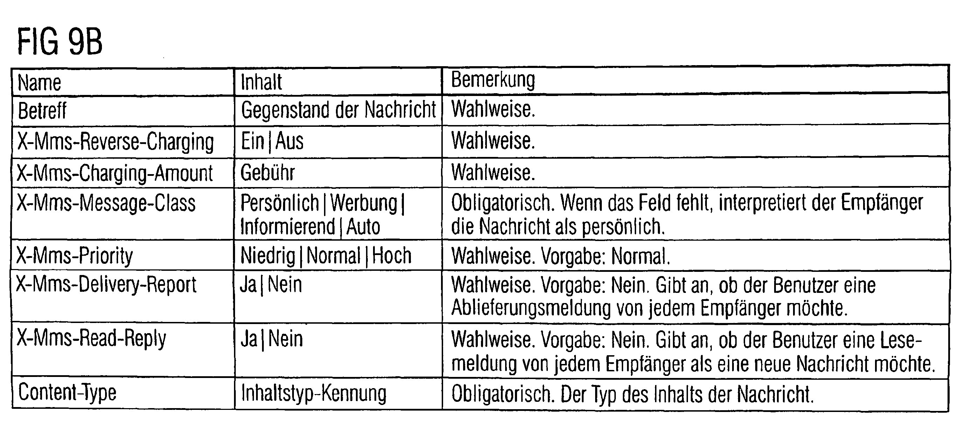

Nun kann der Empfänger entscheiden, ob er den kostenpflichtigen Datensatz 7 von der Ebene 3 des Providers in seine Empfangsebene 4 ,also in den Speicher seines Telekommunikationsgeräts 6, herunterladen will. Hierfür steht ihm in ähnlicher Weise, wie oben für den Versender beschrieben, ein hard- oder softwareseitig implementierter Schalter 16 zur Verfügung, über dessen Betätigung der Empfänger entscheiden kann, ob er den Datensatz 7 ggf. bei eigener Kostenübernahme empfangen will oder nicht. Falls er sich dafür entscheidet, wird er an den Provider die Nachricht 13 (WSP GET.req) zurücksenden. Dadurch wird beim Provider die Datenübertragung 14 (M-Retrieve.conf) an den Empfänger eingeleitet. Anderenfalls wird ein Herunterladen des Datensatzes 7 (Übersendung der Sendung 14 an den Empfänger) nicht freigegeben. Auch ist es möglich, daß der Empfänger die Nachricht erst zu einem späteren, billigeren Zeitpunkt übermittelt bekommen will. Auch die Sendung 14 enthält die beiden Felder 0x19 und 0x1A zur Aufnahme des Identifizierungssignals (Fig. 9). Die Kosteninformation wird somit nicht nur bei Benachrichtigung über eine bereitliegende Sendung, sondern auch bei "Auslieferung" des Datensatzes 7 mitgeliefert und kann somit auch gespeichert oder etwa ausgedruckt werden.

Erfindungsgemäß kann beispielsweise ein Kind seinen Eltern Nachrichten zukommen lassen, ohne dafür selbst bezahlen zu müssen. Dies ist insbesondere dann bedeutend, wenn die Übermittlung direkt bezahlt werden muß, etwa durch Karten, deren Wert verringert wird. Auch bei Karten mit zu geringem Restwert ist dann die Übermittlung von Daten 7 im Reversecharged-Verfahren noch möglich.

Durch die Information der Kosten ist unabhängig vom gewählten Kostenschuldner die Kostentransparenz verbessert. Etwa kann der Empfänger den Versender auch im Nachhinein auf Kosten hinweisen, die vermeidbar gewesen wären, etwa Roaming-Kosten bei Sendungen aus dem Ausland, oder Speichergebühren beim Provider, etwa weil der Empfänger lange Zeit sein Telekommunikationsgerät 6 nicht eingeschaltet hatte. Beide können dann nach Möglichkeiten zu Einsparungen suchen.

Das vorgestellte Verfahren kann in eine Software zum Betreiben des jeweiligen Kommunikationsstandards, etwa UMTS, integriert sein. Die Telekommunikationsgeräte 5,6 sind dann mit einer entsprechenden Software versehen.

Bestandteil der Erfindung ist auch ein MMS relay, das als Element eines Telekommunikationssystems zum Ermöglichen einer Datenübertragung mittels eines Mobilfunknetzes ein Kostenidentifizierungssignal erzeugt. Vorteilhaft leitet es dieses Signal an den Empfänger weiter. Vorteilhaft führt das MMS Relay ein Verfahren nach den Ansprüchen 1 bis 19 durch. Das MMS Relay überprüft vorteilhaft die Zulässigkeit eines Wunsches eines Senders nach Übernahme der Kosten durch den Empfänger und kann diesen Wunsch ablehnen oder akzeptieren. Hierüber kann es vorteilhaft dem Empfänger eine Mitteilung übersenden. Vorteilhaft kann das MMS Relay zudem die Höhe der Kosten für das Versenden des Datensatzes ermitteln und an den Versender übermitteln.

Vorteilhaft findet eine Ermittlung der Kosten für das Empfangen des Datensatzes durch das MMS Relay statt und eine Weitergabe der Höhe der entstehenden Kosten an den Empfänger, wobei die Weitergabe in der Benachrichtigung an den Empfänger (MMS user agent, Ebene 4) durch das MMS Relay des Service Providers (Ebene 3) über das Vorhandensein eines neuen Datensatzes (Multimedia message) und/oder bei der Übermittlung eines Datensatzes (Multimedia message) vom MMS Relay des Service Providers (Ebene 3) zum Empfänger (MMS user agent, Ebene 4) stattfindet.

## Patentansprüche

1. Verfahren zur Abrechnung von Datenübertragungskosten in einem Mobilfunknetz, insbesondere von Text- und/oder Bilddaten mit und ohne Ton,
**dadurch gekennzeichnet,**
**dass** den Daten ein Identifikationssignal für die Übertragungskosten zugeordnet und dieses Identifikationssignal an den Empfänger und/oder Versender der Daten übertragen wird, wobei durch das Identifikationssignal entweder eine Kostenübernahme durch den Empfänger oder eine Kostenübernahme durch den Versender oder eine Kostenübernahme durch beide angezeigt werden kann.

2. Verfahren nach Anspruch 1, indem das Identifikationssignal Information über den Kostenschuldner für die anfallenden Übertragungskosten der Daten enthält.

3. Verfahren nach einem der Ansprüche 1 oder 2, indem das Identifikationssignal Information über die Höhe der Übertragungskosten enthält.

4. Verfahren nach einem der Ansprüche 1 bis 3, indem vom Datenversender vor Datenversand der Kostenschuldner für die Datenübertragung wählbar ist.

5. Verfahren nach einem der Ansprüche 1 bis 4, indem vom Provider vor Datenweiterversand an den Empfänger die entstehenden Übertragungskosten den Daten zugeordnet und die Information hierüber an den Empfänger versandt wird.

6. Verfahren nach einem der Ansprüche 1 bis 5, indem dem Empfänger die Übertragungskosten optisch oder akustisch vor Empfang der Daten angezeigt werden.

7. Verfahren nach einem der Ansprüche 1 bis 6, indem dem Telekommunikationsgerät des Empfängers ein Übernahmeschalter zur Bestätigung der Kostenübernahme zugeordnet ist und die Übertragung zum Empfänger erst nach Auslösung des Übernahmeschalters ermöglicht ist.

8. Verfahren nach einem der Ansprüche 1 bis 7, indem das Verfahren im Mobile Messaging Service MMS angewandt wird.

9. Verfahren nach einem der Ansprüche 1 bis 8, indem das Verfahren im Übertragungsstandard UMTS Universal Mobile Telecommunication System, im GSM Global system for mobile communication, im GPRS General packet radio service und/oder im EDGE Enhanced Data Rates for GSM environments angewandt wird.

10. Verfahren nach einem der Ansprüche 1 bis 9, indem das Identifikationssignal einem oder mehreren Headerfield(s) der übertragenen Daten zugeordnet wird.

11. Verfahren nach einem der Ansprüche 1 bis 10, indem die Auswahl des Kostenschuldners in einem Header-field und die Höhe der Übertragungskosten in einem weiteren Header-field abgelegt werden.

12. Verfahren nach Anspruch 11, indem die Auswahl des Kostenschuldners im Headerfield 0x19 und die Höhe der Übertragungskosten im Header-field 0x1A abgelegt werden.

13. Verfahren nach einem der Ansprüche 10 bis 12, indem das zusätzliche Identifizierungssignal für die Auswahl des Kostenschuldners jeweils bei Übermittlung eines Datensatzes vom Versender zum MMS relay des Service Providers, in der Bestätigung des Empfangs eines übermittelten Datensatzes durch das MMS Relay des Service Providers an den Versender, in der Benachrichtigung an den Empfänger durch das MMS Relay des Service Providers über das Vorhandensein eines neuen Datensatzes und bei der Übermittlung eines Datensatzes vom MMS relay des Service Providers zum Empfänger übertragen wird.

14. Verfahren nach einem der Ansprüche 10 bis 13, indem das zusätzliche Identifizierungssignal für die Höhe der Übertragungskosten jeweils in der Benachrichtigung an den Empfänger durch das MMS Relay des Service Providers über das Vorhandensein eines neuen Datensatzes und bei der Übermittlung eines Datensatzes vom MMS Relay des Service Providers zum Empfänger (MMS user agent) übertragen wird.

15. Verfahren nach einem der Ansprüche 10 bis 14, indem das oder die zusätzlichen Header-field(s) für die Auswahl des Kostenschuldners jeweils den Sendungen M-send.req, M-send.conf, M-Notification.ind und M-Retrieve.conf zugeordnet werden und das oder die zusätzlichen Header-fields(s) für die Höhe der Übertragungskosten nur jeweils den Sendungen M-Notification.ind und M-Retrieve.conf zugeordnet werden.

16. Verfahren nach Anspruch 15, indem der ausgesandten Sendung M-Send.req. ein zusätzliches Header-field für die vom Sender vorzunehmende Auswahl des Kostenschuldners zugeordnet wird.

17. Verfahren nach einem der Ansprüche 15 oder 16, idem in der von einem Provider an den Datenversender zurückgegebenen Sendung M-send.conf dasselbe Header-field mit einer die Kostenschuldnerwahl annehmenden oder ablehnenden Bestätigung quittiert.

18. Verfahren nach einem der Ansprüche 15 bis 17, indem in der von dem Provider an den Empfänger gesandten Sendung M-Notification.ind dasselbe Header-field mit einem die Kostenschuldnerwahl anzeigenden Signal belegt wird.

19. Verfahren nach einem der Ansprüche 15 bis 18, indem die von dem Empfänger an den Provider gesandte Sendung WSP Get.req (14) ein die Kostenschuldnerwahl akzeptierendes Signal darstellt.

20. Verfahren nach einem der Ansprüche 1 bis 19, indem im Fall einer Kostenübernahme durch beide eine hälftige oder andere Kostenteilung zwischen Versender und Empfänger angezeigt werden kann..

21. Mobiltelekommunikationsgerät das Mittel zur (5;6) Durchführung des Verfahrens nach einem der Ansprüche 1 bis 18 umfasst , indem dem Mobiltelekommunikationsgerät (5;6) ein Übernahmeschalter (16) zur Bestätigung der Kostenübernahme zugeordnet ist.

22. Mobiltelekommunikationsgerät nach Anspruch 21, indem dem Mobiltelekommunikationsgerät (5;6) ein Anzeigemittel (15) zur optischen oder akustischen Anzeige der Kosten eines Datenversands (7) und/oder -empfangs zugeordnet ist.

23. Mobiltelekommunikationsgerät nach einem der Ansprüche 21 oder 22, indem dem Mobiltelekommunikationsgerät (5;6) ein Auswahlschalter (17) zur Wahl einer Kostenauferlegung beim Versand von Daten (7) zugeordnet ist.

24. Mobiltelekommunikationsgerät nach einem der Ansprüche 20 bis 22, indem der Auswahlschalter (17) und /oder der Übernahmeschalter (16) softwareseitig implementiert und über ein Eingabemittel anwählbar ist oder sind.

25. Mobilfunkkommunikationsgerät (5;6) nach einem der Ansprüche 21 bis 24, indem,
diesem eine Software zur Belegung von Header-fields von Datensendungen (9;13) mit einem Identifikationssignal für Übertragungskosten zugeordnet ist.

26. Software zum Ermöglichen von Datenübertragung mittels eines Mobilfunknetzes, **dadurch gekennzeichnet, daß** diese Mittel zur Durchführung eines Verfahrens nach einem der Ansprüche 1 bis 20 bei Datenversand im Mobilfunknetz umfasst.

## Claims

1. Method for the accounting of data transmission costs in a mobile radio network, in particular in respect of text and/or image data with and without sound,
**characterised in that**
the data is assigned an identification signal for the transmission costs and that this identification signal is transmitted to the recipient and/or sender of the data, with it being possible, by means of the identification signal, for the assumption of costs either to be indicated by the recipient, the sender, or both respectively.

2. Method according to claim 1,
by the identification signal containing information about the person owing the costs for the incurred transmission costs of the data.

3. Method according to one of claims 1 or 2,
by the identification signal containing information about the level of the transmission costs.

4. Method according to one of claims 1 to 3,
by the sender of the data being able to select before the data is sent who owes the costs for the data transmission.

5. Method according to one of claims 1 to 4,
by the existing transmission costs being assigned to the data by the provider before the data is forwarded to the recipient and the information about this is sent to the recipient.

6. Method according to one of claims 1 to 5,
by the transmission costs being indicated to the recipient visually or acoustically before receipt of the data.

7. Method according to one of claims 1 to 6,
by the telecommunication device of the recipient being assigned an assumption switch to confirm the assumption of costs and the transmission to the recipient not being enabled until the acceptance switch has been triggered.

8. Method according to one of claims 1 to 7,
by the method being applied in the Mobile Messaging Service MMS.

9. Method according to one of claims 1 to 8,
by the method being applied in the transmission standard UMTS Universal Mobile Telecommunication System, in GSM Global System for Mobile Communication, in GPRS General Packet Radio Service and/or in EDGE Enhanced Data Rates for GSM Environments.

10. Method according to one of claims 1 to 9,
by the identification signal being assigned to one or more header fields of the data which is transmitted.

11. Method according to one of claims 1 to 10,
by the selection of the person owing the costs being stored in a header field and the level of the transmission costs being stored in a further header field.

12. Method according to claim 11,
by the selection of the person owing the costs being stored in the header field 0x19 and the level of the transmission costs being stored in the header field 0x1A.

13. Method according to one of claims 1 to 12,
by the additional identification signal for the selection of the person owing the costs being transmitted respectively during the transmission of a data record from the sender to the MMS relay of the service provider, in the confirmation of receipt of a transmitted data record by the MMS relay of the service provider to the sender, in the
notification to the recipient by the MMS relay of the service provider concerning the presence of a new data record, as well as during the transmission of a data record from the MMS relay of the service provider the recipient (MMS user agent).

14. Method according to one of claims 10 to 13,
by the additional identification signal for the level of transmission costs being transmitted respectively in the notification to the recipient by the MMS relay of the service provider concerning the presence of a new data record, as well as during the transmission of a data record from the MMS relay of the service provider to the recipient (MMS user agent).

15. Method according to one of claims 10 to 14,
by the additional header field(s) for the selection of the person owing the costs being assigned respectively to the messages M-send.req, M-send.conf, M-Notification.ind and M-Retrieve.conf and the additional header field(s) for the level of the transmission costs being assigned respectively only to the messages M-Notification.ind and M-Retrieve.conf..

16. Method according to claim 15,
by the outgoing message M-Send.req being assigned an additional header field for the selection by the sender of the person owing the costs.

17. Method according to one of claims 15 or 16,
by in the message M-send.conf returned to the data sender by a provider the same header field acknowledging with a confirmation of acceptance or rejection of a selection of the person owing the costs.

18. Method according to one of claims 15 to 17,
by in the message M-Notification.ind sent to the recipient by the provider the same header field being populated with a signal which indicates the selection of the person owing the costs.

19. Method according to one of claims 15 to 18,
by the message WSP Get.req (14) sent to the provider by the recipient representing a signal accepting the selection of the person owing the costs.

20. Method according to one of claims 1 to 19,
by, in the event of an assumption of costs by both parties, equal cost sharing or another division of cost sharing between the sender and the recipient can be indicated.

21. Mobile telecommunication device (5;6) comprising means for carrying out the method according to one of claims 1 to 18, by the mobile telecommunication device (5;6) being assigned an assumption switch (16) for confirming the assumption of costs.

22. Mobile telecommunication device according to claim 21,
by the mobile telecommunication device (5;6) being assigned an indicator means (15) for visual or acoustic indication of the costs of sending and/or receiving data (7).

23. Mobile telecommunication device according to one of claims 21 or 22,
by the mobile telecommunication device (5;6) being assigned a selection switch (17) to select a charging of costs when data is sent (7).

24. Mobile telecommunication device according to one of claims 20 to 22,
by the selection switch (17) and/or the assumption switch (16) being implemented in software and being selectable by means of an input means.

25. Mobile telecommunication device (5;6) according to one of claims 21 to 24, by this being assigned a software for populating header fields of data messages (9;13) with an identification signal for transmission costs.

26. Software to enable data transmission by means of a mobile radio network,
**characterised in that**
this includes means for implementing a method according to one of claims 1 to 20 when sending data in the mobile radio network.

## Revendications

1. Procédé de décompte de frais de transmission de données dans un réseau radio mobile, en particulier de données de type texte et/ou de type image, avec et sans son, **caractérisé en ce qu'**un signal d'identification pour les frais de transmission est associé aux données et ce signal d'identification est transmis au destinataire et/ou à l'expéditeur des données, le signal d'identification permettant de signaler une prise en charge des frais par le destinataire ou une prise en charge des frais par l'expéditeur ou une prise en charge par les deux.

2. Procédé selon la revendication 1, dans lequel le signal d'identification contient de l'information sur le débiteur des frais pour les frais de transmission des données engendrés.

3. Procédé selon l'une des revendications 1 ou 2, dans lequel le signal d'identification contient de l'information sur le montant des frais de transmission.

4. Procédé selon l'une des revendications 1 à 3, dans lequel le débiteur des frais pour la transmission des données peut être sélectionné par l'expéditeur des données avant l'émission des données.

5. Procédé selon l'une des revendications 1 à 4, dans lequel les frais engendrés sont associés aux données par le fournisseur avant la retransmission des données au destinataire et l'information y relative est envoyée au destinataire.

6. Procédé selon l'une des revendications 1 à 5, dans lequel les frais de transmission sont signalés optiquement ou acoustiquement au destinataire avant la réception des données.

7. Procédé selon l'une des revendications 1 à 6, dans lequel un commutateur de prise en charge pour la confirmation de la prise en charge des frais est associé à l'appareil de télécommunication du destinataire et la transmission au destinataire n'est rendue possible qu'après le déclenchement du commutateur de prise en charge.

8. Procédé selon l'une des revendications 1 à 7, dans lequel le procédé est appliqué dans le service de messagerie mobile (Mobile Messaging Service) MMS.

9. Procédé selon l'une des revendications 1 à 8, dans lequel le procédé est appliqué dans la norme de transmission UMTS (Universal Mobile Telecommunication System), dans le GSM (Global System for Mobile Communication), dans le GPRS (General Packet Radio Service) et/ou dans l'EDGE (Enhanced Data Rates for GSM Environnements).

10. Procédé selon l'une des revendications 1 à 9, dans lequel le signal d'identification est associé à un ou plusieurs champs d'en-tête des données transmises.

11. Procédé selon l'une des revendications 1 à 10, dans lequel la sélection du débiteur des frais est déposée dans un champ d'en-tête et le montant des frais de transmission, dans un autre champ d'entête.

12. Procédé selon la revendication 11, dans lequel la sélection du débiteur des frais est déposée dans le champ d'en-tête 0x19 et le montant des frais de transmission, dans le champ d'en-tête 0x1A.

13. Procédé selon l'une des revendications 10 à 12, dans lequel le signal d'identification additionnel pour la sélection du débiteur des frais est transmis, respectivement, à la transmission d'un jeu de données de l'expéditeur vers le relais MMS du fournisseur de services, dans la confirmation, par le relais MMS du fournisseur de services à l'expéditeur, de la réception d'un jeu de données transmis, dans l'avis adressé au destinataire par le relais MMS du fournisseur de services sur la présence d'un nouveau jeu de données, et à la transmission d'un jeu de données du relais MMS du fournisseur de services au destinataire (MMS user agent).

14. Procédé selon l'une des revendications 10 à 13, dans lequel le signal d'identification additionnel pour le montant des frais est transmis, respectivement, dans l'avis adressé au destinataire par le relais MMS du fournisseur de services sur la présence d'un nouveau jeu de données et à la transmission d'un jeu de données du relais MMS du fournisseur de services au destinataire (MMS user agent).

15. Procédé selon l'une des revendications 10 à 14, dans lequel le ou les champs d'en-tête additionnels pour la sélection du débiteur des frais sont associés, respectivement, aux envois M-send.req, M-send.conf, M-Notification.ind et M-Retrieve.conf et le ou les champs d'en-tête additionnels pour le montant des frais de transmission ne sont associés que, respectivement, aux envois M-Notification.ind et M-Retrieve.conf.

16. Procédé selon la revendication 15, dans lequel est associé, à l'envoi M-Send.req émis, un champ d'entête additionnel pour la sélection du débiteur des frais à opérer par l'expéditeur.

17. Procédé selon l'une des revendications 15 ou 16, dans lequel le même champ d'en-tête acquitte, par une confirmation acceptant ou refusant le choix du débiteur des frais, dans l'envoi M-send.conf retourné par un fournisseur à l'expéditeur des données.

18. Procédé selon l'une des revendications 15 à 17, dans lequel le même champ d'en-tête est occupé par un signal signalant le choix du débiteur des frais dans l'envoi M-Notification.ind envoyé par le fournisseur au destinataire.

19. Procédé selon l'une des revendications 15 à 18, dans lequel l'envoi WSP Get.req (14) envoyé par le destinataire au fournisseur représente un signal d'acceptation du choix du débiteur des frais.

20. Procédé selon l'une des revendications 1 à 19, dans lequel un partage des frais pour moitié ou autre proportion entre l'expéditeur et le destinataire peut être signalé en cas de prise en charge des frais par les deux.

21. Appareil de télécommunication mobile comportant des moyens pour exécuter le procédé selon l'une des revendications 1 à 18, dans lequel un commutateur de prise en charge (16) pour la confirmation de la prise en charge des frais est associé à l'appareil de télécommunication mobile.

22. Appareil de télécommunication mobile selon la revendication 21, dans lequel un moyen de signalisation (15) pour la signalisation optique ou acoustique des frais d'une émission de données (7) et/ou réception de données est associé à l'appareil de télécommunication mobile (5 ; 6).

23. Appareil de télécommunication mobile selon l'une des revendications 21 ou 22, dans lequel un commutateur de sélection (17) pour le choix d'une mise à charge des frais lors de l'émission de données (7) est associé à l'appareil de télécommunication mobile (5 ; 6).

24. Appareil de télécommunication mobile selon l'une des revendications 20 à 22, dans lequel le commutateur de sélection (17) et/ou le commutateur de prise en charge est ou sont implémentés en logiciel et peut ou peuvent être sélectés par l'intermédiaire d'un moyen de saisie.

25. Appareil de communication radio mobile (5 ; 6) selon l'une des revendications 21 à 24, auquel est associé un logiciel pour occuper des champs d'en-tête d'envois de données (9 ; 13) avec un signal d'identification pour des frais de transmission.

26. Logiciel pour permettre une transmission de données au moyen d'un réseau radio mobile, **caractérisé en ce que** celui-ci comprend des moyens pour exécuter un procédé selon l'une des revendications 1 à 20 en cas d'émission de données dans le réseau radio mobile.
